# EUROPEAN PATENT APPLICATION

(11) **EP 2 499 916 A1**
(43) Date of publication of application: **19.09.2012**
(21) Application number: 11838990.7
(22) Date of filing: 07.12.2011
(51) Int. Cl.: A01N 59/16, A01N 25/10, A01P 3/00, C02F 1/50

(54) **ANTIMICROBIAL WATER TREATMENT AGENT**

(30) Priority: 08.12.2010 JP 2010273186; 21.09.2011 JP 2011205762; 06.12.2011 JP 2011266452
(71) Applicant: Nakamura, Kenji, Osaka-shi, Osaka 533-0031 (JP)
(72) Inventor: Nakamura, Kenji, Osaka-shi, Osaka 533-0031 (JP)
(74) Representative: Kling, Simone
(86) International application number: PCT/JP2011/078334
(87) International publication number: WO 2012/077721

(57) **Abstract**

Provided is an antibacterial water treatment agent using polyethylene containing silver zeolite which offers various benefits such as being very safe, wherein such antibacterial water treatment agent is characterized in that the silver zeolite has a type-A crystalline structure and is contained by 10 to 60 percent by weight, and the antibacterial water treatment agent is a porous body having continuous holes formed from the silver zeolite to the surface of the antibacterial water treatment agent, wherein the continuous holes are created by vaporization of crystallization water contained in the silver zeolite.

## Description

### Technical Field

The present invention relates to an antibacterial water treatment agent constituted by polyethylene containing a high content of silver zeolite, and more specifically to an antibacterial water treatment agent that kills bacteria which contaminates water used in various applications such as water servers, water storage tanks, air-conditioners, washing machine tubs, drainage mechanisms for sinks, drain pipe facilities, water-based cleaning machines, etc., by causing silver ions to elute not only from silver zeolite present at the surface of the antibacterial water treatment agent, but also from silver zeolite contained in the antibacterial water treatment agent.

### Background Art

Silver zeolite is most often used as a way to suppress growth of bacteria which contaminates water used in various applications as mentioned above, due to its excellent functionality compared to other antibacterial agents because it is very safe, has a wide antibacterial spectrum, offers excellent durability, and does not produce resistant bacteria. However, silver zeolite exists in powder form and therefore floats on water, which makes it difficult to handle silver zeolite. As a solution to this problem, antibacterial water treatment agents in the form of plastic pellets made of a resin containing silver zeolite are available on the market. Among the patent literatures relating to these plastic pellets, Patent Literature 1 describing an antibacterial composition is known. This antibacterial composition is obtained by mixing silver zeolite with bentonite for 3 to 4 hours and forming the mixture into pellets, after which the pellets are baked at 510 to 520°C for 4.5 hours (refer to Patent Literature 1). However, this antibacterial composition demonstrates its antibacterial action for a period as short as one month or so because, although silver zeolite present on the surface demonstrates antibacterial action, silver zeolite contained within the composition cannot demonstrate antibacterial action. It is pointed out as a problem that, even when the content of silver zeolite is increased, antibacterial action of the composition will last for only two months or so because silver zeolite within the composition has no antibacterial action.

The antibacterial resin molding in Patent Literature 2 is proposed to solve the above problem. This antibacterial resin molding comprises polyolefin resin containing a silver inorganic antibacterial agent (silver zeolite) and halogen salt of alkali metal or alkali earth metal, and this antibacterial resin molding is reported to have suppressed growth of water bacteria for three months when the antibacterial resin molding was immersed in a water storage tank of a water server to let its silver ions gradually release into the water stored in the water server (refer to Patent Literature 2, especially Table 4).

### Background Art Literature

### Patent Literatures

[Patent Literature 1] Japanese Patent Laid-open No. Sho 60-100504
[Patent Literature 2] Japanese Patent Laid-open No. 2008-174576

### Summary of the Invention

### Problems to Be Solved by the Invention

The antibacterial resin molding in Patent Literature 2 is assumed to demonstrate its antibacterial action for around four months because silver zeolite and halogen salt are present in different positions and therefore fine pores remaining after halogen salt has melted will not provide passages through which silver ions can elute, unless silver zeolite is present in these pores, which means that effective antibacterial action cannot be achieved as a majority of silver zeolite is unable to contact water. With the antibacterial resin molding in Patent Literature 2, most of the silver zeolite contained in the resin cannot demonstrate its antibacterial action, as explained above, and silver zeolite, whose unit cost is high, is not effectively utilized.

In light of the aforementioned problems with the prior art, the inventor of the present invention worked on providing an antibacterial water treatment agent using polyethylene with silver zeolite, which is an antibacterial agent offering various benefits such as being very safe, wherein such antibacterial water treatment agent allows for effective utilization of silver ions eluted not only from silver zeolite present on the surface of the polyethylene, but also from silver zeolite contained within the polyethylene, and discovered earlier an antibacterial water treatment agent made with a single-axis extrusion machine, which is constituted by a porous body made of polyethylene containing 10 to 30 percent by weight of silver zeolite and having continuous holes formed from the silver zeolite to the surface of the antibacterial water treatment agent, wherein the continuous holes of the porous body are created by crystallization water contained in the silver zeolite, and consequently filed an application for the invention titled, "Antibacterial Water Treatment Agent" (Japanese Patent Application No. 2010-273186).

Note that adding a large amount of filler, such as silver zeolite, to polyethylene pellets and kneading the mixture causes the fluidity to drop suddenly because a large amount of silver zeolite exists in the pellets in a semi-molten state, and consequently the friction resistance on the screw of the extrusion machine becomes equal to or greater than the shearing force of the screw, thereby causing damage to the screw, thread, etc., and disabling the control of the kneading and compression actions of the screw, as is very well known to those skilled in the art. Since the extrusion machine is expensive, the reality is that manufacturers blend only up to around 30 percent by weight of silver zeolite for fear of expensive losses arising from replacement, repair or inspection of parts caused by damage, stopping or other problems of the extrusion machine.
As explained above, it is considered impossible, in the field of plastic molding technology, to manufacture a thermoplastic resin composition by blending and kneading a large amount of filler with a thermoplastic resin using an extrusion machine for the purpose of improving the physical properties, etc., of the thermoplastic resin, because doing so causes the fluidity, etc., to drop suddenly, and this is considered a technical commonsense.

The "Antibacterial Water Treatment Agent" under the earlier application was completed by considering the above technical commonsense, but if the silver zeolite content is limited to 30 percent by weight, a large space is required and effective silver ion concentration cannot be achieved, and therefore an antibacterial water treatment agent is desired which can be used for various applications including water servers, air-conditioners, washing machine tubs and drainage mechanisms for sinks, achieving a high silver ion concentration without requiring much space. Also with the "Antibacterial Water Treatment Agent" under the earlier application, nitric acid was used to generate silver ions and their concentration was measured. However, the concentration of silver ions that elute when the agent is immersed in water was not measured, and therefore it is not clear how much silver ion concentration can be achieved by the aforementioned antibacterial water treatment agent compared to the antibacterial composition described in Patent Literature 1.

In light of the aforementioned problems of the prior art, the object of the present invention is to provide an antibacterial water treatment agent on the assumption that such antibacterial water treatment agent comprises polyethylene containing very safe silver zeolite offering other benefits, wherein the polyethylene contains the maximum amount of silver zeolite and therefore a higher silver ion concentration than that which the antibacterial composition in Patent Literature 1 achieved.

### Means for Solving the Problems

The present invention was completed after a discovery that up to 60 percent by weight of silver zeolite can be contained in polyethylene using an extrusion machine generally used for manufacturing plastics, or preferably a two-axis extrusion machine, with a side feeder for introducing silver zeolite installed on the extrusion machine.
To be specific, the present invention is as follows.
The antibacterial water treatment agent pertaining to Claim 1 is an antibacterial water treatment agent constituted by polyethylene containing silver zeolite, characterized in that the silver zeolite has a type-A crystalline structure and is contained by 10 to 60 percent by weight, and the antibacterial water treatment agent is a porous body having continuous holes formed from the silver zeolite to the surface of the antibacterial water treatment agent, wherein the continuous holes of the porous body are created by vaporization of crystallization water contained in the above silver zeolite.
The antibacterial water treatment agent pertaining to Claim 2 is characterized in that the melting flow rate of the polyethylene is in a range of 3 to 30 g/10 minutes, and its melting point is in a range of 110 to 140°C.
The antibacterial water treatment agent pertaining to Claim 3 is characterized in that the amount of silver supported on the silver zeolite is in a range of 0.5 to 5.0 percent by weight.
The antibacterial water treatment agent pertaining to Claim 4 is characterized in that the polyethylene is a low-density polyethylene or high-density polyethylene.

### Effects of the Invention

The antibacterial water treatment agent proposed by the present invention contains 10 to 60 percent by weight of silver zeolite in the polyethylene to increase the content of crystallization water in the silver zeolite, and provides a porous body having more continuous holes formed to the surface so that silver ions are eluted not only from the surface of the treatment agent, but also from the inside, where a high silver ion concentration can be produced by selecting a high content of silver zeolite and high amount of supported silver, whereas a low silver concentration can be produced by selecting a low content of silver zeolite and low amount of supported silver, meaning that the necessary silver ion concentration can be achieved by selecting a desired content of silver zeolite and amount of supported silver for the treatment agent according to the application. For this reason, the treatment agent allows for the necessary silver ion concentration to be determined according to each of various applications including water servers, water storage tanks, air-conditioners, washing machine tubs, drainage mechanisms for sinks, drain pipe facilities, water-based cleaning machines, etc.
In addition, the antibacterial water treatment agent proposed by the present invention can be manufactured in the same method traditionally used for manufacturing plastic moldings, which makes it possible to manufacture the agent at low cost.

### Brief Description of the Drawings

[Fig. 1] is a x40 electron microscope image showing a transverse section of an antibacterial water treatment agent containing 30 percent by weight of silver zeolite.
[Fig. 2] is an x35 electron microscope image showing a transverse section of an antibacterial water treatment agent containing 50 percent by weight of silver zeolite.
[Fig. 3] is a graph showing how the concentrations of silver ions eluting from antibacterial water treatment agents (Samples 1 to 5) change over time.
[Fig. 4] is a graph showing how the concentrations of silver ions eluting from antibacterial water treatment agents (Samples 6 to 13) change over time.

### Mode for Carrying out the Invention

The method for manufacturing the antibacterial water treatment agent proposed by the present invention is explained first, followed by an explanation of the antibacterial water treatment agent proposed by the present invention.
The method for manufacturing the antibacterial water treatment agent proposed by the present invention is as follows.

### (Manufacturing Apparatus)

The apparatus used for manufacturing the antibacterial water treatment agent proposed by the present invention is a two-axis extrusion machine generally used for manufacturing plastics. This two-axis extrusion machine is equipped with a main hopper and side feeder, and the main hopper introduces polyethylene, while the side feeder introduces silver zeolite, to the two-axis extrusion machine.

### (Type-A Silver Zeolite)

Zeolite is an aluminosilicate having a three-dimensional skeletal structure and is represented by the general formula xM_{2/n}O·Al₂O₃·ySiO₂·zH₂O. Here, M indicates an ion-exchangeable metal, while n indicates the valance of that ion which is normally a monovalent or bivalent metal ion. x indicates the mol number of metal oxide, y indicates the mol number of silica, and z indicates the mol number of crystallization water. The most widely used form of zeolite is type-A zeolite. A type of zeolite that contains Ag as M is silver zeolite.
The silver zeolite used under the present invention has an average grain size of 0.1 to 20 µm and is dried at 110°C during manufacturing, so the silver zeolite before being introduced to the extrusion machine contains 16.8 percent by weight of crystallization water in its crystalline structure. Under the present invention, it is important that the type-A silver zeolite used contains crystallization water. This is because, when the type-A silver zeolite is heated in the extrusion machine, its crystallization water vaporizes and plays a role in forming continuous holes from inside of polyethylene to the surface. Note that commercially available products of type-A silver zeolite dried at 110°C include Zeomic AW10N ((0.5 percent by weight of silver supported) by Sinanen Zeomic), Zeomic AJ10N ((2.2 percent by weight of silver supported) by Sinanen Zeomic), Zeomic AK10N ((5.0 percent by weight of silver supported) by Sinanen Zeomic), and the like.
Such type-A silver zeolite is structured in such a way that Ag is electrostatically bonded with Al in the three-dimensionally bonded Si-O-Al-O-Si crystalline structure, and silver breaks free from the crystalline structure by means of ion exchange action, thereby eluting as silver ions and killing bacteria.

### (Polyethylene)

To form continuous holes in polyethylene (PE) by means of vaporization of crystallization water in type-A silver zeolite, preferably the polyethylene should have a melting flow rate (MFR) in a range of 3 to 30 g/10 minutes and melting point in a range of 110 to 140°C. When forming continuous holes from the inside of pellets to their surface by vaporizing crystallization water in type-A silver zeolite, a MFR of less than 3 g/10 minutes causes the viscosity to rise to the point of making formation of continuous holes difficult. If the MFR exceeds 30 g/10 minutes, on the other hand, the higher fluidity causes the holes, created by vapor, to disappear under the agitating action of the extrusion machine. It is important that the polyethylene used under the present invention has a MFR in a range of 3 to 30 g/10 minutes and melting point in a range of 110 to 140°C.
Note that, while the antibacterial water treatment agent can also be manufactured using polypropylene, it is difficult to form continuous holes by vaporizing crystallization water in type-A silver zeolite.

For the PE, any low-density polyethylene (LDPE) or high-density polyethylene (HDPE) can be used as long as the MFR is in the aforementioned range. Note that LDPE products include Novatec LD LJ8041 (by Japan Polyethylene; MFR 23 g/10 minutes, melting point 123°C), Petrothene 340 (by Tosoh; MFR 7 g/10 minutes, melting point 110°C), Sunfine PAK F type (by Asahi Kasei Chemicals; MFR 10 g/10 minutes, melting point 125°C), Suntec L2340E (by Asahi Kasei Chemicals; NFR 3.8 g/10 minutes, melting point 120°C), and the like. HDPE products include Nipolon Hard 1000 (by Tosoh; MFR 20 g/10 minutes, melting point 134°C) and the like.

### (Antibacterial Water Treatment Agent)

The antibacterial water treatment agent proposed by the present invention is a porous body comprising PE containing 10 to 60 percent by weight of silver zeolite of type-A crystalline structure, with the skeleton of silver zeolite containing 16.8 percent by weight of crystallization water, where this crystallization water is vaporized to form continuous holes from the silver zeolite in the antibacterial water treatment agent to the surface of the agent. When 3.5 g of this antibacterial water treatment agent is immersed in 1.0 L of tap water for 24 hours, the concentration of silver ions eluting from the surface and inside of the agent reaches 28 ppb or above.
As explained above, 16.8 percent by weight of crystallization water is contained in the skeleton of type-A silver zeolite and, in the extrusion process after kneading, this crystallization water vaporizes from the skeleton of type-A silver zeolite in PE to generate air bubbles, thereby forming continuous holes toward the surface of pellet-shaped antibacterial water treatment agent. To confirm that these continuous holes are formed in the pellet-shaped antibacterial water treatment agent, antibacterial water treatment agents (pellets) containing 30 percent by weight of silver zeolite and 50 percent by weight of silver zeolite, respectively, were vertically sliced from the side face and the cut surfaces were observed by an electron microscope.

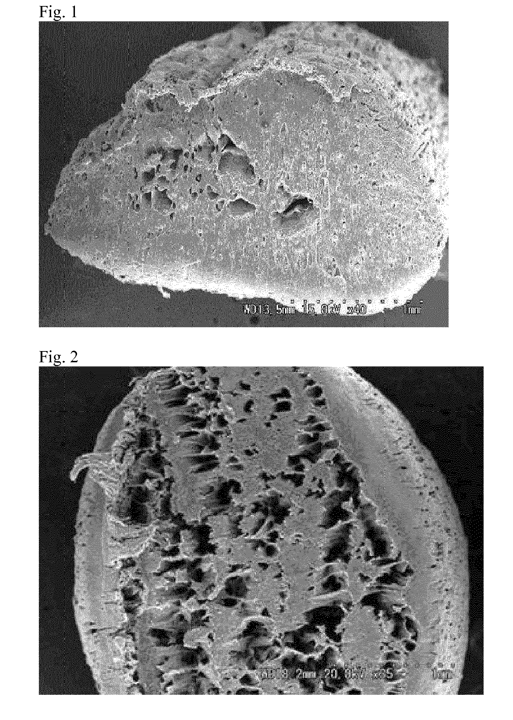

Fig. 1 shows an x40 electron microscope image of the cut surface of the antibacterial water treatment agent containing 30 percent by weight of type-A silver zeolite. Fig. 2 shows an x35 electron microscope image of the cut surface of the antibacterial water treatment agent containing 50 percent by weight of type-A silver zeolite.
From the images in Figs. 1 and 2, it is clear that numerous holes are formed in the cut surfaces of antibacterial water treatment agents and that the holes in Fig. 2 are larger than the holes in Fig. 1. These observations indicate that each antibacterial water treatment agent is a porous body where crystallization water vaporized from the skeleton of type-A silver zeolite in PE generates air bubbles, thereby forming continuous holes to the surface of the antibacterial water treatment agent, and that the greater the blending quantity of silver zeolite, the larger the hole diameter becomes.

For this reason, it is evident that each antibacterial water treatment agent has a structure whereby, when it is immersed in water, water enters from its surface and travels through the continuous holes to allow metal ions (calcium, potassium, sodium, etc.) in the water to contact type-A silver zeolite to cause ion exchange, and as a result, silver ions dissociate from type-A silver zeolite and travel through the continuous holes to be released from the surface of antibacterial water treatment agent; in other words, the antibacterial water treatment agent is a porous body having continuous holes formed from the skeleton of type-A silver zeolite to the surface of the antibacterial water treatment agent.
Accordingly, antibacterial water treatment agents containing 10 to 60 percent by weight of type-A silver zeolite were prepared and the concentration of silver ions eluting from each treatment agent was measured using the high-frequency inductive coupling plasma emission analyzer specified below.
For the extrusion machine, the TEX44α two-axis extrusion machine (by Japan Steel Works, having two hoppers and a side feeder) was used and polyethylene and type-A silver zeolite were introduced from the main hopper and side feeder, respectively. The operating conditions of the extrusion machine were as follows:
Resin extrusion rate: 15 kg/hour
Cylinder temperature: 160 to 200°C
Cylinder speed: 106 rpm
Die temperature: 170 to 210°C
Extruded pellets were cooled with water and cut using a cutter to obtain pellets of approx. 3.5 mm in diameter and approx. 4.0 mm in length.

### (Measurement Method for Silver Ion Concentration)

At room temperature, 1.0 L of tap water was put in a 2.0-L beaker, after which 3.5 g of each sample was filled into a polyethylene net bag with a weight stone attached to it and the bag was put into the tap water. The bag was kept stationary under intermittent agitation every 3 to 5 hours. Note that the beaker was covered with a polyethylene film to prevent dust, etc., suspended in air from entering.
To measure the silver ion concentration, a water server was assumed and the test water in the container was discarded and replaced with 1.0 L of fresh tap water every day. As shown in Table 2, 100 ml of sample water was collected immediately before the test water was discarded after specified periods such as one day, three days and five days, and analyzed by ICP.
The silver ion concentration of collected sample water was analyzed using a high-frequency inductive coupling plasma emission analyzer (ICP S-8100 by Shimadzu Corporation).

### Examples

Four types of samples for examples conforming to the present invention (Samples 1 to 4) and one sample for comparative example (Sample 5) were prepared based on the contents of polyethylene and type-A silver zeolite shown in Table 1 below, and the concentration of silver ions eluting from the each sample was measured.

**[Table 1]**

| Sample | Polyethylene | | Type-A silver zeolite | | |
|---|---|---|---|---|---|
| | Blending quantity | Content | Amount of silver supported | Blending quantity | Content |
| | (Kg) | (Percent by weight) | (Percent by weight) | (Kg) | (Percent by weight) |
| 1 | 10.0 | 40 | 2.2 | 15.0 | 60 |
| 2 | 12.5 | 50 | 2.2 | 12.5 | 50 |
| 3 | 16.25 | 65 | 2.2 | 8.75 | 35 |
| 4 | 17.5 | 70 | 2.2 | 7.5 | 30 |
| 5 | 17.5 | 70 | 2.5 | 7.5 | 30 |

### (Example 1 (Sample 1))

In Example 1, Petrothene 340 (by Tosoh) which is a LDPE, and Zeomic AJ10N (by Sinanen Zeomic; 2.2 percent by weight of silver supported) which is a type-A silver zeolite dried at 110°C, were used.
The LDPE has a MFR of 7 g/10 minutes and melting point of 110°C, and was contained by 40 percent by weight. In other words, type-A silver zeolite was contained by 60 percent by weight. Using a two-axis extrusion machine (by Japan Steel Works, having a main hopper and side feeder) was used and 10.0 kg of LDPE pellets and 15.0 kg of silver zeolite were introduced from the main hopper and side feeder, respectively, into the two-axis extrusion machine. Thereafter, the LDPE pellets and silver zeolite were melted and kneaded together in the heating/cooling system of the two-axis extrusion machine heated to approx. 140°C, and eventually the mixture was extruded and cut to form an antibacterial water treatment agent. In this way an antibacterial water treatment agent conforming to the present invention was manufactured.
Because the type-A silver zeolite containing 16.8 percent by weight of crystallization water was heated to a temperature of approx. 140°C, vapor generated from the type-A silver zeolite in the LDPE being kneaded and extruded formed continuous holes and consequently a porous antibacterial water treatment agent was obtained.

### (Examples 2 to 4 (Samples 2 to 4))

In Examples 2 to 4, the same polyethylene and type-A silver zeolite used in Example 1 were used in different amounts contained, respectively. For the manufacturing method for antibacterial water treatment agent, the same method used in Example 1 was employed.

### (Comparative Example 1 (Sample 5))

Comparative Example 1 used a silver zeolite obtained by treating Zeomic AJ10N in atmosphere for 3 hours at 250°C, which supported 2.5 percent by weight of silver and contained 3.0 percent by weight of crystallization water. An antibacterial water treatment agent was manufactured in the same manner as in Example 1 by blending 30 percent by weight of silver zeolite. Comparative Example 1 gave a traditional anhydrous antibacterial water treatment agent from which crystallization water was released in an atmosphere having a temperature of 250°C or above.

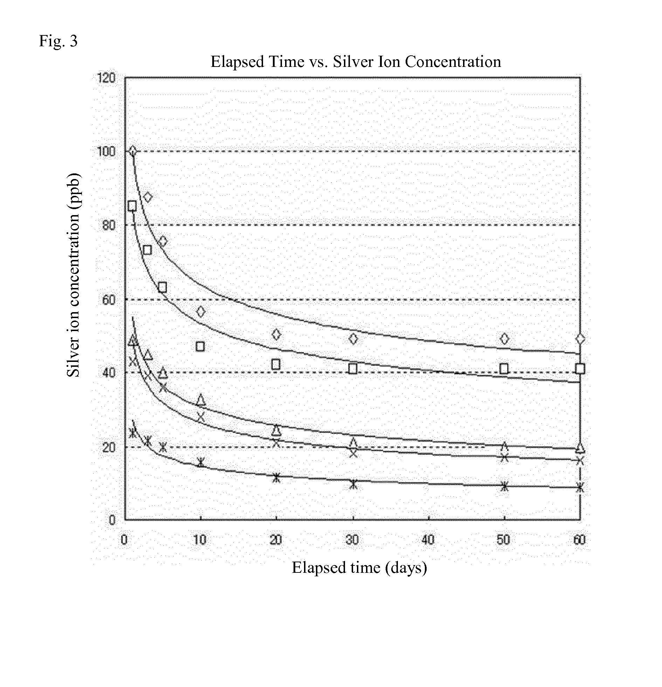

Table 2 shows the silver ion concentrations (ppb) obtained from the test. Fig. 3 shows how the concentration of silver ions eluting from each antibacterial water treatment agent changed with time over a period of 1 to 60 days.
In Fig. 3, ★ indicates Sample 1, □ indicates Sample 2, Δ indicates Sample 3, x indicates Sample 4, and ^{∗} indicates Sample 5, meaning that the graph shows the results of Sample 1, Sample 2, Sample 3, Sample 4 and Sample 5 from the top.
Note that the values of silver ion concentrations in Examples and Comparative Example shown in Table 2 were each obtained as an arithmetic mean of three samples (N = 3). Similarly, the values shown in Table 4 below were each obtained as an arithmetic mean of three samples (N = 3), as with the values in Table 2.

**[Table 2]**

| Sample | Day 1 | Day 3 | Day 5 | Day 10 | Day 20 | Day 30 | Day 50 | Day 60 |
|---|---|---|---|---|---|---|---|---|
| 1 | 100 | 88 | 76 | 56 | 50 | 49 | 49 | 49 |
| 2 | 85 | 73 | 63 | 47 | 42 | 41 | 41 | 41 |
| 3 | 49 | 45 | 40 | 33 | 25 | 21 | 20 | 20 |
| 4 | 43 | 39 | 36 | 28 | 21 | 18 | 17 | 16 |
| 5 | 24 | 21 | 20 | 15 | 12 | 10 | 9 | 9 |

According to Fig. 3, Examples 1 to 4 (Samples 1 to 4) representing antibacterial water treatment agents conforming to the present invention saw a large amount (43 to 100 ppb) of silver ions elute on the first day, while Comparative Example 1 has a silver ion concentration of 24 ppb. Thereafter, the eluting amount of silver ions gradually decreased and became roughly constant after day 20. On day 60, the silver ion concentration was 9 ppb with the sample of Comparative Example 1 containing 30 percent by weight of silver zeolite, 16 ppb with the sample of Example 4 containing 30 percent by weight of silver zeolite, 20 ppb with the sample of Example 3 containing 35 percent by weight of silver zeolite, 41 ppb with the sample of Example 2 containing 50 percent by weight of silver zeolite, and 49 ppb with the sample of Example 1 containing 60 percent by weight of silver zeolite. Regarding the above silver ion concentrations, we can draw on the study by Sakagami et al. entitled "Basic Research on the Validation of the Antibacterial Activity of Silver Compounds" (refer to Bokin Bobai, Vol. 37, No. 7. p. 499) in which the bacterial count of Staphylococcus aureus in nutrient broth reportedly dropped by 2 log or more at a silver ion concentration of 10 ppb. This means that antibacterial effect is demonstrated on Staphylococcus aureus cultured in a bacterial culture medium as long as the silver ion concentration is 10 ppb, and needless to say the samples of Examples 1 to 4 have antibacterial effect.
Note that the samples of Examples and Comparative Example used the same amount, 3.5 g, but while the silver ion concentration in the sample of Comparative Example 1 was less than 10 ppb, the samples of Examples 3 and 4 had a silver ion concentration of around 1.5 times to twice that level, and the samples of Examples 1 and 2 had a silver ion concentration of around 4.5 to 5.5 times that level. This shows that, if the space available to install an antibacterial water treatment agent is small under a given application, the antibacterial water treatment agent of Example 1 can be used to achieve the same antibacterial effect as the antibacterial water treatment agent of Comparative Example 1 with just one-fifth the space and weight.

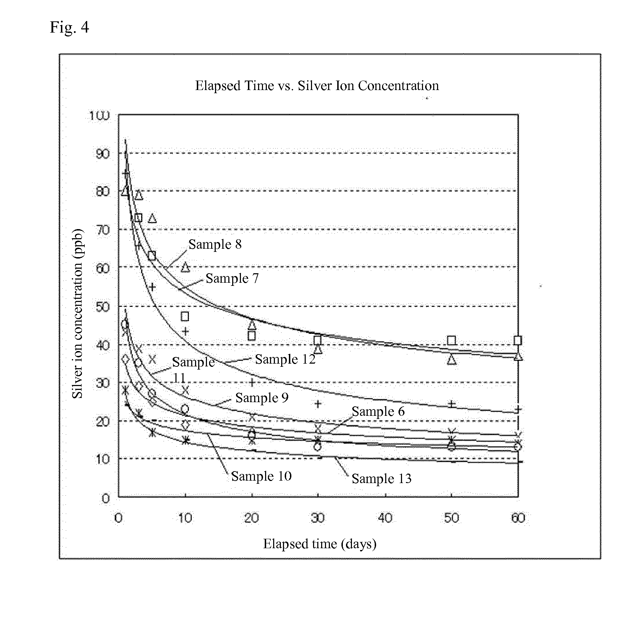

In the above examples, Zeomic AJ10N where 2.2 percent by weight of silver is supported was used in Examples 1 to 4 (Samples 1 to 4), but as mentioned earlier there are various type-A silver zeolite products available on the market, including Zeomic AW10N where 0.5 percent by weight of silver is supported, Zeomic AJ10N where 2.2 percent by weight of silver is supported, and Zeomic AK10N where 5.0 percent by weight of silver is supported.
Accordingly, as the next step the concentrations of silver ions eluting from the samples in Examples 5 to 11 (Samples 6 to 12) and Comparative Example 2 (Sample 13), each using one of the aforementioned three types of type-A silver zeolite supporting different amounts of silver and prepared at the blending quantity and content shown in Table 3, were measured. The results are shown in Table 4. Comparative Example 2 represents an antibacterial water treatment agent using anhydrous silver zeolite.
Also, how the concentration of silver ions eluting from each antibacterial water treatment agent changed with time over a period of 1 to 60 days is shown in Fig. 4.
In Fig. 4, ★ indicates Sample 6, □ indicates Sample 7, Δ indicates sample 8, x indicates Sample 9, ^{∗} indicates sample 10, ○ indicates sample 11, + indicates Sample 12, and ― indicates Sample 13, with a line representing the trend of each sample shown in the graph.

**[Table 3]**

| Sample | Polyethylene | | Type-A silver zeolite | | |
|---|---|---|---|---|---|
| | Blending quantity | Content | Amount of silver supported | Blending quantity | Content |
| | (Kg) | (Percent by weight) | (Percent by weight) | (Kg) | (Percent by weight) |
| 6 | 10.0 | 40 | 0.5 | 15.0 | 60 |
| 7 | 12.5 | 50 | 2.2 | 12.5 | 50 |
| 8 | 16.3 | 65 | 5.0 | 8.8 | 35 |
| 9 | 17.5 | 70 | 2.2 | 7.5 | 30 |
| 10 | 17.5 | 70 | 0.5 | 7.5 | 30 |
| 11 | 20.0 | 80 | 2.2 | 5.0 | 20 |
| 12 | 22.5 | 90 | 5.0 | 2.5 | 10 |
| 13 | 17.5 | 70 | 2.5 | 7.5 | 30 |

**[Table 4]**

| Sample | Day 1 | Day 3 | Day 5 | Day 10 | Day 20 | Day 30 | Day 50 | Day 60 |
|---|---|---|---|---|---|---|---|---|
| 6 | 36 | 29 | 25 | 19 | 17 | 16 | 16 | 16 |
| 7 | 85 | 73 | 63 | 47 | 42 | 41 | 41 | 41 |
| 8 | 80 | 79 | 73 | 60 | 45 | 39 | 36 | 37 |
| 9 | 43 | 39 | 36 | 28 | 21 | 18 | 17 | 16 |
| 10 | 28 | 22 | 17 | 15 | 15 | 15 | 15 | 14 |
| 11 | 45 | 35 | 27 | 23 | 16 | 13 | 13 | 13 |
| 12 | 85 | 66 | 55 | 43 | 30 | 24 | 24 | 23 |
| 13 | 24 | 21 | 20 | 15 | 12 | 10 | 9 | 9 |

According to Fig. 4, the antibacterial water treatment agents conforming to the present invention, corresponding to Examples 5 to 11 (Samples 6 to 12), contained 10 to 60 percent by weight of silver zeolite and eluted a large amount of silver ions on the first day (28 to 85 ppb), while the sample of Comparative Example 2 (Sample 13) had a silver ion concentration of 24 ppb. The elution amount of silver ions decreased gradually thereafter until becoming roughly constant after day 20. On day 60, the silver ion concentration was 9 ppb in Comparative Example 2, and ranged from 13 to 41 ppb in Examples 5 to 11. As mentioned above, antibacterial effect can be expected as long as the silver ion concentration is 10 ppb or more, so it goes without saying that the samples of Examples 5 to 11 exhibit antibacterial effect.

When the first-day silver ion concentrations of the samples of Comparative Examples and Examples shown in Figs. 3 and 4 were compared, the sample of Comparative Example had a silver ion concentration of 24 ppb due to silver ions eluting from the surface of the antibacterial water treatment agent, while the samples of Examples had a silver ion concentration ranging from 28 to 85 ppb clearly due to silver ions eluting from the surface and inside of the agent.
Note that while Sample 6 in Table 3 containing 60 percent by weight of type-A silver zeolite supporting 0.5 percent by weight of silver had a silver ion concentration of 16 ppb after 60 days, Sample 10 containing 30 percent by weight of type-A silver zeolite supporting the same amount of silver had a silver ion concentration of 14 ppb. From this, it is necessary to blend at least 10 percent by weight of type-A silver zeolite supporting the aforementioned amount of silver in order to obtain a silver ion concentration of 10 ppb, as a minimum, at which antibacterial effect can be expected. On the other hand, preparing pellets by blending over 60 percent by weight of type-A silver zeolite into PE might cause damage to the extrusion machine due to a low MFR. Accordingly, it is important that the type-A silver zeolite used under the present invention is contained by 10 to 60 percent by weight.

### (Glass Beads)

The porous antibacterial water treatment agent proposed by the present invention should preferably be submerged in water to elute silver ions, but when an attempt to immerse it in a water storage tank of a water server, water tank or other water bath, the antibacterial water treatment agent, being a porous body, floats on water, and this makes it difficult for silver ions to elute into water from the portions above water. For this reason, the antibacterial water treatment agent must be put in a net with a weight attached to it and sunk in water, or the antibacterial water treatment agent must be mixed with glass beads to increase its specific gravity so that it will sink in water. The antibacterial water treatment agent can be sunk in water when its PE contains 10 to 30 percent by weight of glass beads made of E glass that does not elute in water. EA-150 (by Nitto Boseki) is one example of E glass beads having an average grain size of 10 to 20 µm, solid spherical shape, and specific gravity of 2.6. For example, PE can be blended with 20 percent by weight of glass beads to adjust the apparent specific gravity to 1.24. By blending in glass beads, the specific gravity of the antibacterial water treatment agent can be adjusted to a level at which the agent sinks in water. Blending in glass beads by over 30 percent by weight results in the specific gravity being over-adjusted, while blending in less than 10 percent by weight of glass beads does not adjust the specific gravity sufficiently.

The next group of Examples, or specifically Examples 12 to 14 (Samples 20 to 22) representing antibacterial water treatment agents whose PE contains type-A silver zeolite supporting 2.2 percent by weight of silver, as well as glass beads, are explained below.

### (Example 12 (Sample 20))

In Example 12, Novatec LD LJ18041 (by Japan Polyethylene) which is a LDPE, Zeomic AJ10N (by Sinanen Zeomic; 2.2% by weight of silver supported) which is a type-A silver zeolite dried at 110°C, and E glass beads EA-150 (by Nitto Boseki), were used.
The LDPE had a MFR of 23 g/10 minutes and melting point of 123°C, and was blended by 30 percent by weight. The type-A silver zeolite was blended by 60 percent by weight, while E glass beads were blended in by 10 percent by weight.
Using a two-axis extrusion machine (by Japan Steel Works, equipped with a main hopper and side feeder), 7.5 kg of pellets of LDPE were introduced from the main hopper, and 15.0 kg of silver zeolite and 2.5 kg of E glass beads were introduced from the side feeder, into the two-axis extrusion machine. Thereafter, the LDPE pellets, silver zeolite and E glass beads were melted and kneaded together in the heating/cooling system of the two-axis extrusion machine heated to approx. 140°C, and eventually the mixture was extruded and cut to form an antibacterial water treatment agent containing glass beads. In this way an antibacterial water treatment agent conforming to the present invention was manufactured.
Because the type-A silver zeolite containing 16.8 percent by weight of crystallization water was heated to a temperature of approx. 140°C, vapor generated from the type-A silver zeolite in the LDPE being kneaded and extruded formed continuous holes and consequently a porous antibacterial water treatment agent was obtained.

### (Example 13 (Sample 21))

In Example 13, Novatec LD LJ18041 (by Japan Polyethylene) which is a LDPE, Zeomic AJ10N (by Sinanen Zeomic; 2.2% by weight of silver supported) which is a type-A silver zeolite dried at 110°C, and E glass beads EA-150 (by Nitto Boseki), were used.
The MFR, melting point and blending quantity of the LDPE were the same as those in Example 12. In the meantime, the type-A silver zeolite was blended by 50 percent by weight and E glass beads were blended in by 20 percent by weight. Also, the manufacturing method for the antibacterial water treatment agent was the same as the one used in Example 12 and is therefore not explained.

### (Example 14 (Sample 22))

In Example 14, Novatec LD LJ18041 (by Japan Polyethylene) which is a LDPE, Zeomic AJ10N (by Sinanen Zeomic; 2.2% by weight of silver supported) which is a type-A silver zeolite dried at 110°C, and E glass beads EA-150 (by Nitto Boseki), were used.
The MFR and melting point of the LDPE were the same as those in Samples 12 and 14, but the LDPE was blended by 35 percent by weight. In the meantime, the type-A silver zeolite was blended by 35 percent by weight and E glass beads were blended in by 30 percent by weight. The manufacturing method for the antibacterial water treatment agent was the same as the one used in Examples 12 and 13 and is therefore not explained.

Table 5 lists the results of measuring the changing values of silver ion concentrations over time of the antibacterial water treatment agents given by Examples 12 to 14. Note that silver ion concentrations were measured in the same manner as with Samples 1 to 13.

**[Table 5]**

| Sample | Day 1 | Day 3 | Day 5 | Day 10 | Day 20 | Day 30 | Day 50 | Day 60 |
|---|---|---|---|---|---|---|---|---|
| 20 | 94 | 81 | 70 | 52 | 47 | 46 | 46 | 46 |
| 21 | 115 | 98 | 85 | 63 | 57 | 55 | 55 | 55 |
| 22 | 74 | 68 | 60 | 50 | 38 | 32 | 30 | 29 |

The concentration of eluting silver ions increases as the blending quantity of glass beads increases. This is probably because when the molten resin composition discharged from the die head of the extrusion machine is quickly cooled in water in the cooling bath, a gap forms between the glass bead surface and resin surface due to the different shrinkages of the two materials, and consequently the surface area of resin increases relatively, and accordingly more silver zeolite grains are exposed to the resin surface.

## Claims

1. An antibacterial water treatment agent constituted by polyethylene containing silver zeolite, **characterized in that** the silver zeolite has a type-A crystalline structure and is contained by 10 to 60 percent by weight, and the antibacterial water treatment agent is a porous body having continuous holes formed from the silver zeolite to the surface of the antibacterial water treatment agent, said continuous holes being created by vaporization of crystallization water contained in the above silver zeolite.

2. An antibacterial water treatment agent according to Claim 1, **characterized in that** the melting flow rate of the polyethylene is in a range of 3 to 30 g/10 minutes, and its melting point is in a range of 110 to 140°C.

3. An antibacterial water treatment agent according to Claim 1 or 2, **characterized in that** the amount of silver supported on the silver zeolite is in a range of 0.5 to 5.0 percent by weight.

4. An antibacterial water treatment agent according to any one of Claims 1 to 3, **characterized in that** the polyethylene is a low-density polyethylene or high-density polyethylene.

5. An antibacterial water treatment agent according to any one of Claims 1 to 4, **characterized in that** a silver ion concentration is 28 ppb or more as measured when 3.5 g of the antibacterial water treatment agent is immersed in 1.0 L of tap water for 24 hours.

6. An antibacterial water treatment agent according to any one of Claims 1 to 5, **characterized in that** glass beads are contained in the antibacterial water treatment agent by 10 to 30 percent by weight.
